# EUROPEAN PATENT APPLICATION

(11) **EP 2 343 926 A1**
(43) Date of publication of application: **13.07.2011**
(21) Application number: 11000141.9
(22) Date of filing: 11.01.2011
(51) Int. Cl.: H04W 48/08

(54) **Apparatuses, systems, and methods for maintaining allowed closed subscriber group (CSG) list**

(30) Priority: 11.01.2010 US 293710 P; 10.01.2011 US 987512
(71) Applicant: HTC Corporation, Taoyuan County 330 (TW)
(72) Inventor: Tiwari, Kundan, Taoyuan City Taoyuan County 330 (TW)
(74) Representative: Schmidbauer, Andreas Konrad

(57) **Abstract**

A mobile communications device with a wireless module and a controller module is provided. The wireless module performs wireless transceiving to and from a cellular station of a service network, and the cellular station is associated with a Closed Subscriber Group (CSG) identification (ID) and configured to operate in a hybrid access mode. The controller module transmits a request message for Circuit Switched (CS) or Packet Switched (PS) domain to the cellular station via the wireless module, and receives a response message corresponding to the request message from the cellular station via the wireless module. Also, the controller module determines whether the response message indicates authorized membership of the CSG ID, and adds the CSG ID in an allowed CSG list in response to the CSG ID not being in the allowed CSG list and the response message indicating authorized membership of the CSG ID.

## Description

### BACKGROUND OF THE INVENTION

### Field of the Invention

The invention generally relates to maintenance of allowed Closed Subscriber Group (CSG) lists, and more particularly, to apparatuses, systems, and methods for maintaining allowed CSG lists during location registration procedures, service access procedures, attachment procedures, routing area update procedures, and tracking area update procedures with CSG cellular stations operating in a hybrid mode.

### Description of the Related Art

In a typical mobile communications environment, a user equipment (UE) may communicate voice and/or data signals with one or more service networks via cellular stations of service networks. The wireless communications between the UE and the service networks may be in compliance with various wireless technologies, such as the Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA 2000) technology, Time Division-Synchronous Code Division Multiple Access (TD-SCDMA) technology, Worldwide Interoperability for Microwave Access (WiMAX) technology, Long Term Evolution (LTE) technology, and others.

Particularly, in a service network in compliance with the WCDMA or LTE technology, a special cellular station, called Home Node-B (HNB), or Home e-Node-B (HeNB) is introduced, which is typically designed for improving wireless reception quality of service networks for indoor coverage, such as at a home or in a small business space. When being configured to operate in an open access mode, the HNB or HeNB may provide service access to subscribers of any service network (subject to the roaming agreement reached therebetween). Specially, the HNB or HeNB may be associated with a Closed Subscriber Group (CSG) and may only provide service access to the subscribers belonging to the associated CSG when operating in a closed access mode. Alternatively, the HNB or HeNB may be configured to operate in a hybrid access mode, in which not only the subscribers belonging to the associated CSG but also subscribers of any service network (subject to the roaming agreement reached therebetween) may obtain service access.

Take the WCDMA or LTE technology in compliance with the 3GPP TS 25.304 specification, v.8.7.0 (referred to herein as the 25.304 specification) and the 3GPP TS 22.220 specification, v.9.2.0 (referred to herein as the 22.220 specification) for example. A mobile communications device may perform a scan for available CSG cellular stations following a request by a user, and display the available CSG cellular stations with the associated names or CSG identifications (CSG IDs) and the names of the service networks to which the available CSG cellular stations belong. The mobile communications device may further prompt an indication to the user as to which of the available CSG cellular stations is contained in an Allowed CSG List, wherein the Allowed CSG List is a list used for storing the CSG IDs of the CSG cellular stations the mobile communications device is authorized to access. Subsequently, the user may select one of the available CSG cellular stations and the mobile communications device may reselect to the selected CSG cellular station from the serving cellular station. After reselecting to the selected CSG cellular station, the mobile communications device may perform a location registration procedure to register itself to the service network to which the selected CSG cellular station belongs. If the location registration attempt is accepted by the service network, the mobile communications device may add the CSG ID of the CSG cellular station to the Allowed CSG List.

### BRIEF SUMMARY OF THE INVENTION

In one aspect of the invention, a mobile communications device comprising a wireless module and a controller module is provided. The wireless module performs wireless transceiving to and from a cellular station of a service network, wherein the cellular station is associated with a Closed Subscriber Group (CSG) identification (ID) and configured to operate in a hybrid access mode. The controller module transmits a request message for Circuit Switched (CS) or Packet Switched (PS) domain to the cellular station via the wireless module, and receives a response message corresponding to the request message from the cellular station via the wireless module. Also, the controller module determines whether the response message indicates authorized membership of the CSG ID, and adds the CSG ID in an allowed CSG list in response to the CSG ID not being in the allowed CSG list and the response message indicating authorized membership of the CSG ID.

In another aspect of the invention, a method for maintaining an allowed CSG list in a mobile communications device is provided. The method comprises the steps of transmitting a request message for CS or PS domain to a cellular station of a service network, wherein the cellular station is associated with a CSG ID and configured to operate in a hybrid access mode, receiving a response message corresponding to the request message from the cellular station, determining whether the response message indicates authorized membership of the CSG ID, and adding the CSG ID in an allowed CSG list in response to the CSG ID not being in the allowed CSG list and the response message indicating authorized membership of the CSG ID.

In yet another aspect of the invention, a service network comprising a cellular station and a control node is provided. The cellular station, associated with a CSG ID and configured to operate in a hybrid access mode, performs wireless transceiving to and from a mobile communication device. The control node receives a request message for CS or PS domain from the mobile communication device via the cellular station, and transmits a response message with a CSG member indicator to the mobile communication device via the cellular station in response to the request message, wherein the CSG member indicator indicates whether the mobile communication device has authorized membership of the CSG ID.

In still another aspect of the invention, a method for a service network to update an allowed CSG list in a mobile communications device is provided. The method comprises the steps of receiving a request message for CS or PS domain from the mobile communication device via a cellular station, wherein the cellular station is associated with a CSG ID and configured to operate in a hybrid access mode, and transmitting a response message with a CSG member indicator to the mobile communication device via the cellular station in response to the request message, wherein the CSG member indicator indicates whether the mobile communication device has authorized membership of the CSG ID.

Other aspects and features of the present invention will become apparent to those with ordinarily skill in the art upon review of the following descriptions of specific embodiments of apparatuses and methods for maintaining allowed CSG list.

### BRIEF DESCRIPTION OF DRAWINGS

The invention can be more fully understood by reading the subsequent detailed description and examples with references made to the accompanying drawings, wherein:

Fig. 1 is a block diagram illustrating a mobile communications environment according to an embodiment of the invention;

Fig. 2 is a message sequence chart illustrating a location registration procedure according to an embodiment of the invention;

Fig. 3 is a message sequence chart illustrating a service access procedure according to an embodiment of the invention;

Fig. 4 is a message sequence chart illustrating an attachment procedure according to an embodiment of the invention;

Fig. 5 is a message sequence chart illustrating a routing area update procedure according to an embodiment of the invention;

Fig. 6 is a message sequence chart illustrating a tracking area update procedure according to an embodiment of the invention;

Fig. 7 is a message sequence chart illustrating an inbound mobility to a CSG cellular station according to an embodiment of the invention;

Fig. 8 is a flow chart illustrating a method for maintaining an allowed CSG list in a mobile communications device according to an embodiment of the invention; and

Fig. 9 is a flow chart illustrating a method for a service network to update an allowed CSG list in a mobile communications device according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The 3GPP specifications are used to teach the spirit of the invention, and the invention is not limited thereto.

It is noted that, for the case where a mobile communications device reselects to a CSG cellular station operating in the hybrid access mode, the mobile communications device may not add the CSG ID of the CSG cellular station to the Allowed CSG List according to the 22.220 specification, even if the location registration attempt is accepted by the service network to which the CSG cellular station belongs. If the service network decides to authorize membership of the CSG to the mobile communications device, it may transmit an Over-The-Air (OTA) message, such as a Short Message Service (SMS) message, to request the mobile communications device to add the CSG ID of the CSG cellular station to the Allowed CSG List. However, the delivery of the OTA message may be unsuccessful due to various reasons, e.g., the mobile communications device is moved to a place with bad signal receptions or no signal reception at all (such as when in an elevator or basement). The unsuccessful delivery of the OTA message may cause the mobile communication device to exclude from the cell reselection procedure the CSG cellular stations associated with the same CSG ID of the current CSG cellular station. Moreover, if the mobile communications device already added the CSG ID of the CSG cellular station to the Allowed CSG List and the service network later decides to cancel the authorized membership of the CSG granted to the mobile communications device, it may transmit another OTA message to request the mobile communications device to remove the CSG ID of the CSG cellular station from the Allowed CSG List. However, the delivery of the OTA message may be unsuccessful, and if it is so, the mobile communication device may be unable to obtain any preferential Quality of Service (QoS) from the CSG cellular station or unable to transmit a proximity indication when detecting nearness to the CSG cellular station (since the mobile communication device mistakenly deems that the membership of the CSG is still valid and, the service network is already canceled on the authorized membership of the CSG). Thus, the problems described above may greatly hinder the performance of the mobile communications device as to obtaining service access from the CSG cellular stations operating in the hybrid mode.

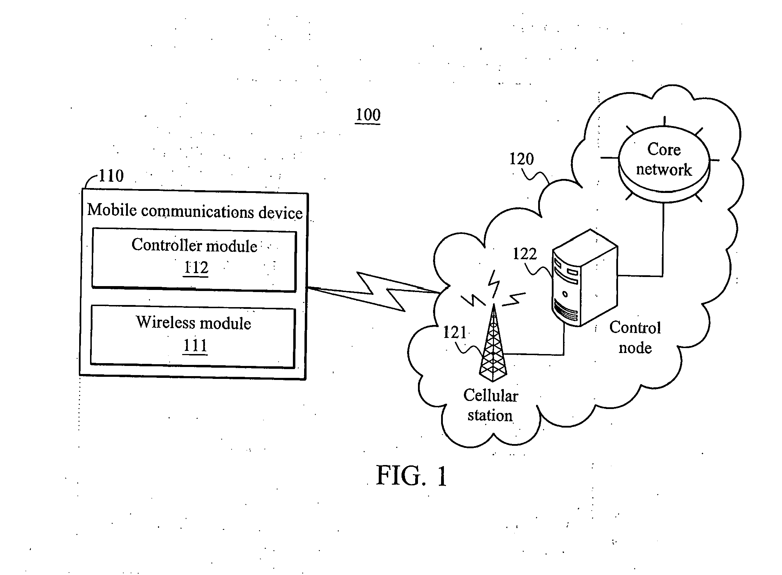

The invention provides apparatuses and methods for maintaining the Allowed CSG List during location registration procedures and service access procedures, to correctly add and remove the CSG ID of a CSG cellular station operating in the hybrid access mode. Fig. 1 is a block diagram illustrating a mobile communications environment according to an embodiment of the invention. In the mobile communications environment 100, the mobile communications device 110 is wirelessly connected to the cellular station 121 of the service network 120 for obtaining wireless service access. Generally, the cellular station 121 may be referred to as a base station or an access station, or may be referred to as an HNB in a WCDMA network or a HeNB in an LTE network, which is controlled by the control node 122 to provide the functionality of wireless transceiving for the service network 120. In this embodiment, the cellular station 121 is a CSG cellular station which is configured to operate in a hybrid access mode and is associated with a CSG ID. The mobile communication device 110 comprises a wireless module 111 for performing the functionality of wireless transceiving to and from the cellular station 121. To further clarify, the wireless module 111 may comprise a baseband unit (not shown) and a radio frequency (RF) unit (not shown). The baseband unit may contain multiple hardware devices to perform baseband signal processing, including analog to digital conversion (ADC)/digital to analog conversion (DAC), gain adjusting, modulation/demodulation, encoding/decoding, and so on. The RF unit may receive RF wireless signals, convert the received RF wireless signals to baseband signals, which are processed by the baseband unit, or receive baseband signals from the baseband unit and convert the received baseband signals to RF wireless signals, which are later transmitted. The RF unit may also contain multiple hardware devices to perform radio frequency conversion. For example, the RF unit may comprise a mixer to multiply the baseband signals with a carrier oscillated in the radio frequency of the wireless communications system, wherein the radio frequency may be 900MHz, 1900MHz, or 2100MHz utilized in WCDMA systems, or may be 900MHz, 2100MHz, or 2.6GHz utilized in LTE systems, or others depending on the radio access technology (RAT) in use. Also, the mobile communication device 110 comprises a controller module 112 for controlling the operation of the wireless module 111 and other functional components, such as a display unit and/or keypad serving as the MMI (man-machine interface), a storage unit storing the program codes of applications or communication protocols, or others. In one embodiment, the service network 120 may be a WCDMA network and the mobile communications device 110 may be a User Equipment (UE) in compliance with the 25.304 and 22.220 specifications, the 3GPP TS 25.304, 36.304 and 22.220 specifications, and/or other related specifications of the WCDMA technology; while in another embodiment, the service network 120 may be an LTE network and the mobile communications device 110 may be a UE in compliance with the 25.304 and 22.220 specifications and/or other related specifications of the LTE technology. Alternatively, the mobile communications device 110 may be a UE in compliance with both of the specifications of the WCDMA and LTE communication protocols, and the invention is not limited thereto.

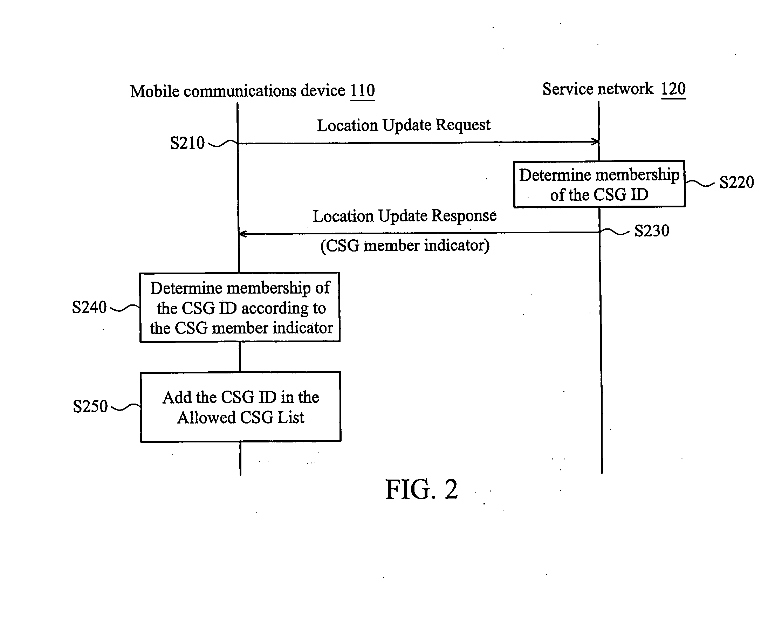

To be more specific, the controller module 112 controls the wireless module 111 for performing a location registration procedure and a service access procedure with the service network 120 via the cellular station 121. Fig. 2 is a message sequence chart illustrating a location registration procedure according to an embodiment of the invention. The location registration procedure may be triggered for registering the mobile communications device 110 to the service network 120 when the mobile communications device 110 is successfully camped on the cellular station 121. To start the location registration procedure, the controller module 112 transmits a Location Update Request to the cellular station 121 via the wireless module 111 (step S210). The Location Update Request comprises the registration area information, such as the Public Land Mobile Network (PLMN) ID of the service network 120 which is read from the system information broadcast from the cellular station 121. If more than one PLMN ID is read from the system information broadcast, the controller module 112 may only include in the Location Update Request the PLMN ID(s) that makes the cellular station 121 a suitable cell for camping on. When receiving the Location Update Request, the control node 122 determines whether the mobile communication device 110 has authorized membership of the CSG ID of the cellular station 121 (step S220). Subsequently, the control node 122 replies to the mobile communications device 110 with a Location Update Response via the cellular station 121 (step S230). Specifically, the Location Update Response includes a CSG member indicator for indicating whether the mobile communications device 110 has authorized membership of the CSG ID of the cellular station 121. In one embodiment, the CSG member indicator may be a new bit field specified in the Location Update Response, which indicates authorized membership when set to 1 and unauthorized membership when set to 0. When receiving the Location Update Response, the mobile communications device 110 retrieves the CSG member indicator and determines whether authorized membership of the CSG ID is indicated (step S240). In this embodiment, the CSG member indicator indicates authorized membership of the CSG ID, so the controller module 112 keeps the CSG ID in the Allowed CSG List (step S250). Specifically, the controller module 112 may first determine whether the CSG ID is already in the Allowed CSG List, and then adds the CSG ID in the Allowed CSG List only if the CSG ID is not already in the Allowed CSG List. Thus, the mobile communications device 110 may consider the cellular station 121 as a CSG cellular station from which it has authorized membership to obtain wireless services. It is noted that, in addition to the management of the CSG ID, other operations regarding the update of location are also involved. However, detailed descriptions are omitted here for brevity as it is beyond the scope of the invention. For detailed descriptions of the location update, reference may be made to the 3GPP TS 24.008, v9.2.0.

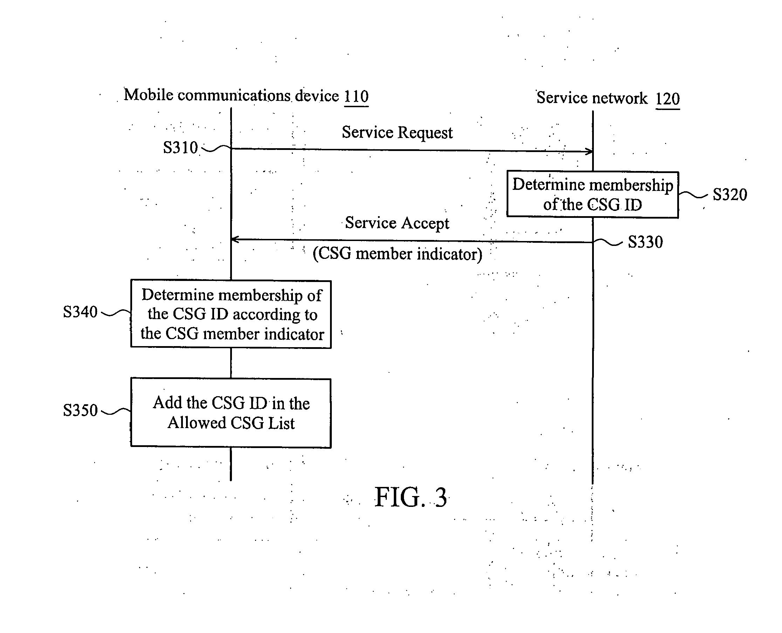

Fig. 3 is a message sequence chart illustrating a service access procedure according to an embodiment of the invention. The service access procedure may be triggered to request service access to the service network 120 after the mobile communications device 110 is successfully camped on the cellular station 121 and registered to the service network 120. In this embodiment, the service access procedure is triggered for requesting service access to the Packet Switched (PS) domain of the service network 120. To start the service access procedure, the controller module 112 transmits a Service Request to the cellular station 121 via the wireless module 111 (step S310). The Service Request comprises the information concerning the requested service, such as the type of the requested service. When receiving the Service Request, the control node 122 determines whether the mobile communication device 110 has authorized membership of the CSG ID of the cellular station 121 (step S320). Subsequently, the control node 122 replies to the mobile communications device 110 with a Service Accept via the cellular station 121 (step S330). Specifically, the Service Accept includes a CSG member indicator for indicating whether the mobile communications device 110 has authorized membership of the CSG ID of the cellular station 121. In one embodiment, the CSG member indicator may be a new bit field specified in the Service Accept, which indicates authorized membership when set to 1 and unauthorized membership when set to 0. When receiving the Service Accept, the mobile communications device 110 retrieves the CSG member indicator and determines whether authorized membership of the CSG ID is indicated (step S340). In this embodiment, the CSG member indicator indicates authorized membership of the CSG ID, so the controller module 112 adds the CSG ID in the Allowed CSG List (step S350). Specifically, the controller module 112 may first determine whether the CSG ID is already in the Allowed CSG List, and then add the CSG ID in the Allowed CSG List only if the CSG ID is not already in the Allowed CSG List. Thus, the mobile communications device 110 may consider the cellular station 121 as a CSG cellular station from which it has authorized membership to obtain service access. In another embodiment, the service access procedure is triggered for requesting service access to the Circuit Switched (CS) domain of the service network 120. The flow of the service access procedure for the CS domain is similar to Fig. 3, except that the Service Request and the Service Accept should be replaced with a CM Service Request and a CM Service Accept, respectively. It is noted that, in addition to the management of the CSG ID, other operations regarding the service requests in the CS and PS domains are also involved. However, detailed descriptions are omitted here for brevity as it is beyond the scope of the invention. For detailed descriptions of the service requests in the CS and PS domains, reference may be made to the 3GPP TS 24.008, v 9.2.0, and TS 24.301, v 9.2.0.

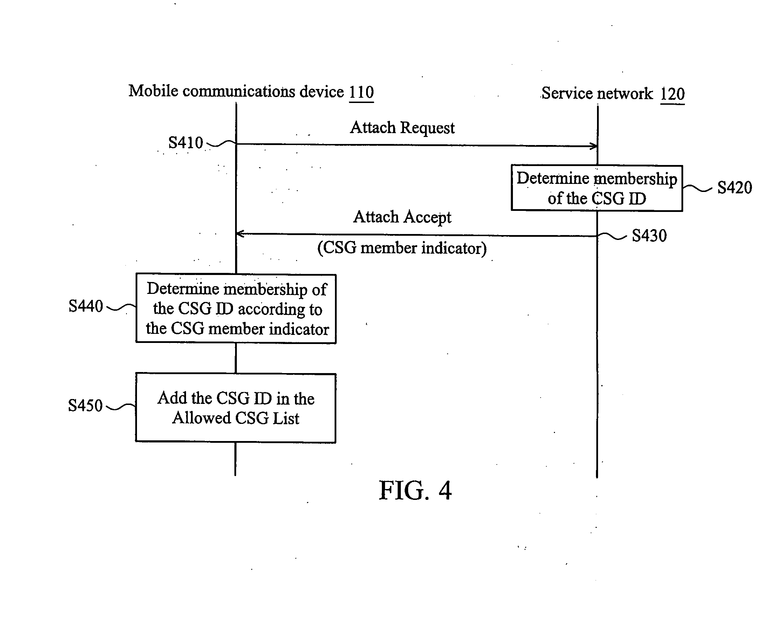

Fig. 4 is a message sequence chart illustrating an attachment procedure according to an embodiment of the invention. The attachment procedure may be triggered to register the mobile communications device 110 to the PS domain of the service network so that the mobile communications device 110 may start a packet data session. To start the attachment procedure, the controller module 112 transmits an Attach Request to the cellular station 121 via the wireless module 111 (step S410). The Attach Request comprises the registration information concerning the mobile communications device 110. When receiving the Attach Request, the control node 122 determines whether the mobile communication device 110 has authorized membership of the CSG ID of the cellular station 121 (step S420). Subsequently, the control node 122 replies to the mobile communications device 110 with an Attach Accept via the cellular station 121 (step S430). Specifically, the Attach Accept includes a CSG member indicator for indicating whether the mobile communications device 110 has authorized membership of the CSG ID of the cellular station 121. In one embodiment, the CSG member indicator may be a new bit field specified in the Attach Accept, which indicates authorized membership when set to 1 and unauthorized membership when set to 0. When receiving the Attach Accept, the mobile communications device 110 retrieves the CSG member indicator and determines whether authorized membership of the CSG ID is indicated (step S440). In this embodiment, the CSG member indicator indicates authorized membership of the CSG ID, so the controller module 112 adds the CSG ID in the Allowed CSG List (step S450). Specifically, the controller module 112 may first determine whether the CSG ID is already in the Allowed CSG List, and then add the CSG ID in the Allowed CSG List only if the CSG ID is not already in the Allowed CSG List. Thus, the mobile communications device 110 may consider the cellular station 121 as a CSG cellular station from which it has authorized membership to obtain service access. It is noted that, in addition to the management of the CSG ID, other operations regarding the attachment from the mobile communications device 110 to the PS domain of the service network 120 are also involved. However, detailed descriptions are omitted here for brevity as it is beyond the scope of the invention. For detailed descriptions of the attachment procedure, reference may be made to the 3GPP TS 24.008 V9.2.0.

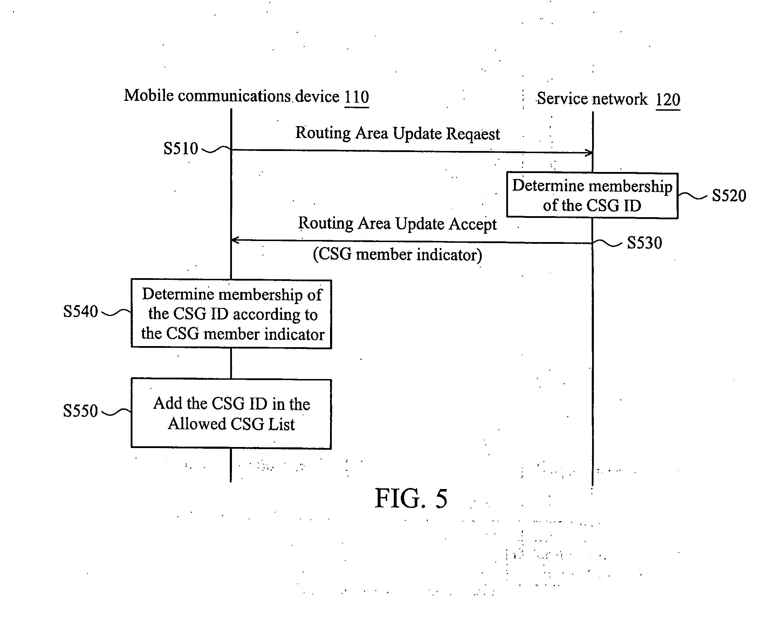

Fig. 5 is a message sequence chart illustrating a routing area update procedure according to an embodiment of the invention. The routing area update procedure may be triggered by the mobile communications device 110 to inform the service network 120 that it is about to be moved from one routing area to another routing area. To start the routing area update procedure, the controller module 112 transmits a Routing Area Update Request to the cellular station 121 via the wireless module 111 (step S510). The Routing Area Update Request comprises the information concerning the new routing area. When receiving the Routing Area Update Request, the control node 122 determines whether the mobile communication device 110 has authorized membership of the CSG ID of the cellular station 121 (step S520). Subsequently, the control node 122 replies to the mobile communications device 110 with a Routing Area Update Accept via the cellular station 121 (step S530). Specifically, the Routing Area Update Accept includes a CSG member indicator for indicating whether the mobile communications device 110 has authorized membership of the CSG ID of the cellular station 121. In one embodiment, the CSG member indicator may be a new bit field specified in the Routing Area Update Accept, which indicates authorized membership when set to 1 and unauthorized membership when set to 0. When receiving the Routing Area Update Accept, the mobile communications device 110 retrieves the CSG member indicator and determines whether authorized membership of the CSG ID is indicated (step S540). In this embodiment, the CSG member indicator indicates authorized membership of the CSG ID, so the controller module 112 adds the CSG ID in the Allowed CSG List (step S650). Specifically, the controller module 112 may first determine whether the CSG ID is already in the Allowed CSG List, and then add the CSG ID in the Allowed CSG List only if the CSG ID is not already in the Allowed CSG List. Thus, the mobile communications device 110 may consider the cellular station 121 as a CSG cellular station from which it has authorized membership to obtain service access. It is noted that, in addition to the management of the CSG ID, other operations regarding the update of routing area are also involved. However, detailed descriptions are omitted here for brevity as it is beyond the scope of the invention. For detailed descriptions of the routing area update, reference may be made to the 3GPP specification.

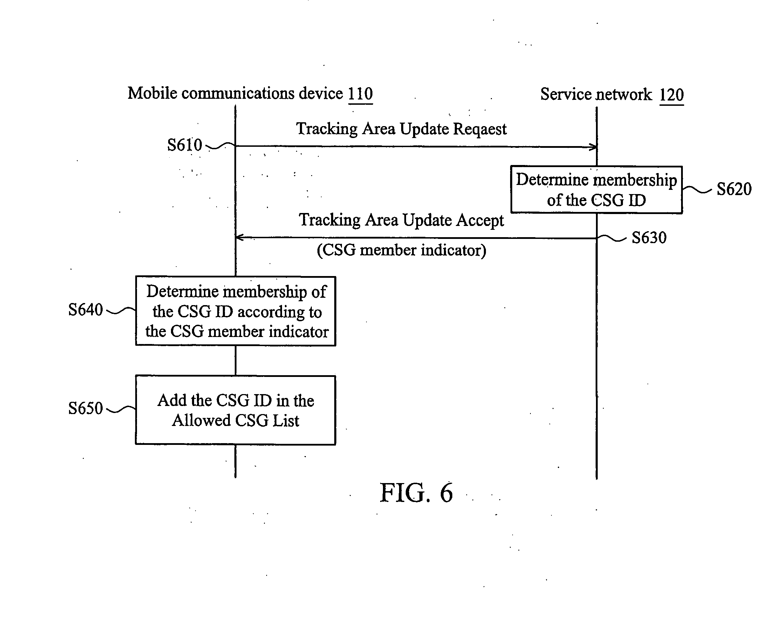

Fig. 6 is a message sequence chart illustrating a tracking area update procedure according to an embodiment of the invention. The tracking area update procedure may be triggered by the mobile communications device 110 to inform the service network 120 that it is about to be moved from one tracking area to another tracking area. To start the tracking area update procedure, the controller module 112 transmits a Tracking Area Update Request to the cellular station 121 via the wireless module 111 (step S510). The Tracking Area Update Request comprises the information concerning the new tracking area. When receiving the Tracking Area Update Request, the control node 122 determines whether the mobile communication device 110 has authorized membership of the CSG ID of the cellular station 121 (step S620). Subsequently, the control node 122 replies to the mobile communications device 110 with a Tracking Area Update Accept via the cellular station 121 (step S630). Specifically, the Tracking Area Update Accept includes a CSG member indicator for indicating whether the mobile communications device 110 has authorized membership of the CSG ID of the cellular station 121. In one embodiment, the CSG member indicator may be a new bit field specified in the Tracking Area Update Accept, which indicates authorized membership when set to 1 and unauthorized membership when set to 0. When receiving the Tracking Area Update Accept, the mobile communications device 110 retrieves the CSG member indicator and determines whether authorized membership of the CSG ID is indicated (step S640). In this embodiment, the CSG member indicator indicates authorized membership of the CSG ID, so the controller module 112 adds the CSG ID in the Allowed CSG List (step S650). Specifically, the controller module 112 may first determine whether the CSG ID is already in the Allowed CSG List, and then add the CSG ID in the Allowed CSG List only if the CSG ID is not already in the Allowed CSG List. Thus, the mobile communications device 110 may consider the cellular station 121 as a CSG cellular station from which it has authorized membership to obtain service access. It is noted that, in addition to the management of the CSG ID, other operations regarding the update of tracking area are also involved. However, detailed descriptions are omitted here for brevity as it is beyond the scope of the invention. For detailed descriptions of the tracking area update, reference may be made to the 3GPP specification.

Since the CSG ID of the cellular station 121 is in the Allowed CSG List, the mobile communications device 110 may proceed with any following operation with the benefit of having authorized membership of the CSG ID. In one embodiment, the mobile communications device 110 is initially camped on the cellular station 121. When the signal quality of the cellular station 121 is detected to be below a predetermined threshold for cell resection, the controller module 112 may proceed with a cell reselection procedure with an implicit CSG priority rule which specifies the CSG cellular stations, including the CSG cellular stations operating in the hybrid access mode, to have a higher priority than the normal cellular stations, so that the CSG cellular stations are more likely to be selected as the target cellular stations for cell reselection. This may ensure that the mobile communications device 110 stays in one of the CSG cellular stations as long as possible, and may maintain continuity of the preferential QoS obtained from the CSG cellular stations.

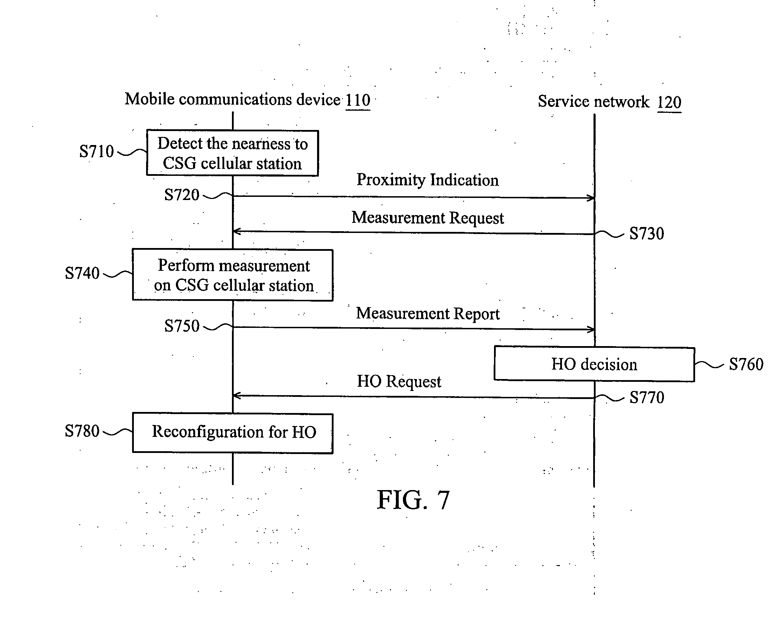

Fig. 7 is a message sequence chart illustrating an inbound mobility to a CSG cellular station according to an embodiment of the invention. Initially, the mobile communications device 110 reselects to a normal cellular station away from the cellular station 121, and later, is moved to another normal cellular station next to or near the cellular station 121 (or another CSG cellular station which the mobile communications device 110 has visited before). In response to detecting the nearness to the cellular station 121 (step S710), the controller module 112 may transmit a proximity indication to the service network 120 via the wireless module 111 (step S720). Specifically, the detection of the nearness to the cellular station 121 may be performed according to a finger print record which is stored in the mobile communications device 110 for keeping the finger print of the CSG cellular stations the mobile communications device 110 has visited before, such as the cell identities of the neighboring cellular stations. When receiving the proximity indication, the service network 120 may transmit a measurement request to the mobile communications device 110 (step S730), which requests a measurement to be performed on the cellular station 121. Accordingly, when receiving the measurement request, the controller module 112 performs a measurement on the cellular station 121 via the wireless module 111 (step S740). After the measurement is finished, the controller module 112 further reports the measurement result to the service network 120 via the wireless module 111 (step S750). According to the measurement result, the service network 120 determines whether to hand over the mobile communications device 110 from its currently camped cellular station to the cellular station 121 (step S760). In this embodiment, the measurement result indicates that the signal quality of the cellular station 121 is good enough, so the service network 120 transmits a HandOver Request (HO Request) to the mobile communications device 110 (step S770). When receiving the HO Request, the controller module 112 reconfigures the wireless module 111 for the handover to the cellular station 121 (step S780). In this way, the mobile communications device 110 may be handed over to the CSG cellular station as soon as possible where the preferential QoS may be obtained.

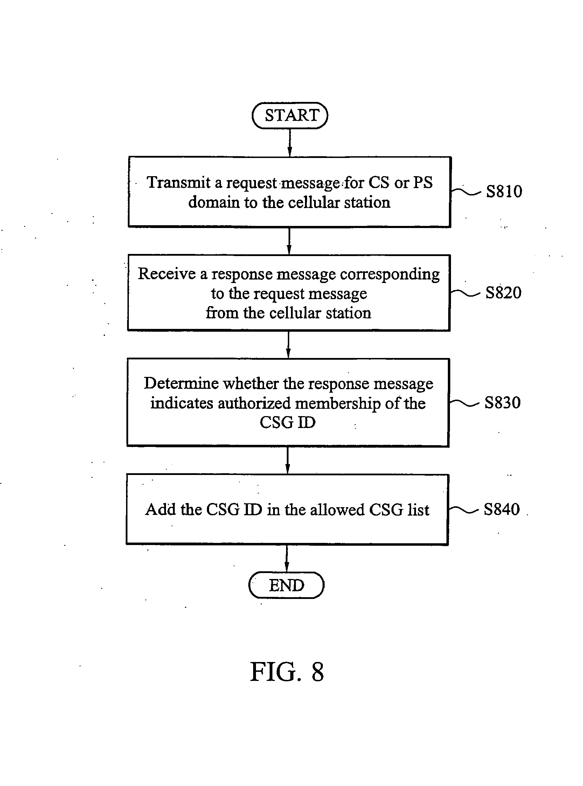

Fig. 8 is a flow chart illustrating a method for maintaining an allowed CSG list in a mobile communications device according to an embodiment of the invention. In this embodiment, the mobile communications device is camped on a cellular station of the service network, wherein the cellular station is associated with a CSG ID and configured to operate in a hybrid access mode. To begin, the mobile communications device transmits a request message for CS or PS domain to the cellular station (step S810). Next, the mobile communications device receives a response message corresponding to the request message from the cellular station (step S820), and accordingly determines whether the response message indicates authorized membership of the CSG ID (step S830). The response message may include a new bit field for indicating authorized membership when set to 1 and unauthorized membership when set to 0. If the response message indicates authorized membership of the CSG ID, then the mobile communications device adds the CSG ID in the allowed CSG list in response to the CSG ID not being in the allowed CSG list (step S840).

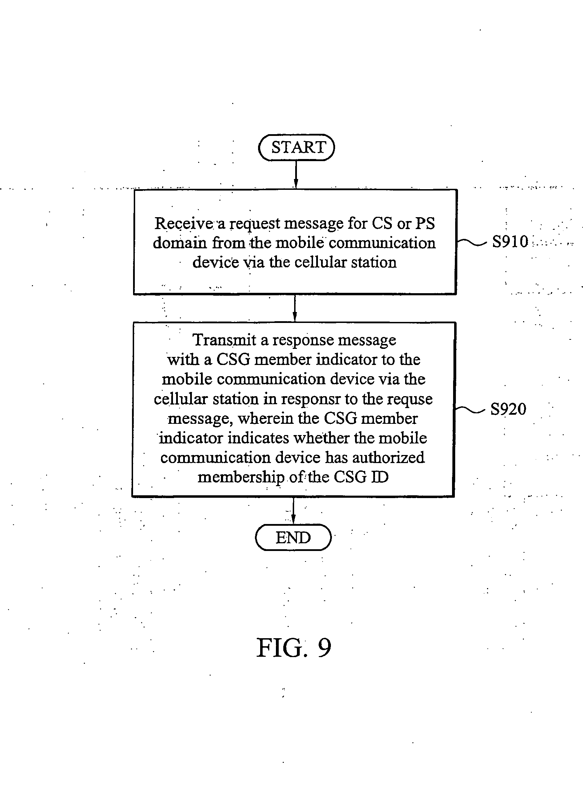

Fig. 9 is a flow chart illustrating a method for a service network to update an allowed CSG list in a mobile communications device according to an embodiment of the invention. In this embodiment, the mobile communications device is camped on a cellular station of the service network, wherein the cellular station is associated with a CSG ID and configured to operate in a hybrid access mode. To begin, the service network receives a request message for CS or PS domain from the mobile communication device via the cellular station (step S910). In response to the request message, the service network further transmits a response message with a CSG member indicator to the mobile communication device via the cellular station, wherein the CSG member indicator indicates whether the mobile communication device has authorized membership of the CSG ID (step S920). Thus, the mobile communication device may determine whether to add or remove the CSG ID to or from the allowed CSG list according to the CSG member indicator. Specifically, if the CSG member indicator indicates authorized membership of the CSG ID, the mobile communication device may add the CSG ID in the allowed CSG list. Otherwise, if the CSG member indicator indicates unauthorized membership of the CSG ID, the mobile communication device may remove the CSG ID from the allowed CSG list.

Note that in Figs. 8 and 9, the request message for CS domain may be a Location Update Request as shown in Fig. 2 or a CM Service Request, and the request message for PS domain may be a Service Request as shown in Fig. 3, an Attach Request as shown in Fig. 4, a Routing Area Update Request as shown in Fig. 5, or a Tracking Area Update Request as shown in Fig. 6. Similarly, the response message for CS domain may be a Location Update Accept as shown in Fig. 2 or a CM Service Accept, and the response message for PS domain may be a Service Accept as shown in Fig. 3, an Attach Accept as shown in Fig. 4, a Routing Area Update Accept as shown in Fig. 5, or a Tracking Area Update Accept as shown in Fig. 6.

Since the CSG ID of the cellular station is properly kept in the allowed CSG list, the mobile communications device may proceed with any following operation with the benefit of having authorized membership of the CSG ID. In one embodiment, the mobile communications device is initially camped on a CSG cellular station. When the signal quality of the CSG cellular station is detected to be below a predetermined threshold for cell resection, the mobile communications device may proceed with a cell reselection procedure with an implicit CSG priority rule which specifies the CSG cellular stations, including the CSG cellular stations operating in the hybrid access mode, to have a higher priority than the normal cellular stations, so that the CSG cellular stations are more likely to be selected as the target cellular stations for cell reselection. This may ensure that the mobile communications device stays in one of the CSG cellular stations as long as possible, and may maintain continuity of the preferential QoS obtained from the CSG cellular stations. In another embodiment, properly maintaining the CSG ID of a CSG cellular station in the allowed CSG list speeds up the inbound mobility of the mobile communications device to the CSG cellular station by triggering the transmission of proximity indication, as described above with respect to Fig. 7.

While the invention has been described by way of example and in terms of preferred embodiment, it is to be understood that the invention is not limited thereto. Those who are skilled in this technology can still make various alterations and modifications without departing from the scope and spirit of this invention. For example, the service network may be a WCDMA network, an LTE network, an LTE-Advanced network, or a wireless network in compliance with any evolutionary technology of the WCDMA/LTE technology family. Therefore, the scope of the present invention shall be defined and protected by the following claims and their equivalents.

## Claims

1. A mobile communications device, comprising:
a wireless module performing wireless transceiving to and from a cellular
station of a service network, wherein the cellular station is associated with a Closed Subscriber Group (CSG) identification (ID) and configured to operate in a hybrid access mode; and
a controller module transmitting a request message for Circuit Switched (CS)
or Packet Switched (PS) domain to the cellular station via the wireless module, receiving a response message corresponding to the request message from the cellular station via the wireless module, determining whether the response message indicates authorized membership of the CSG ID, and add the CSG ID in an allowed CSG list in response to the CSG ID not being in the allowed CSG list and the response message indicating authorized membership of the CSG ID.

2. The mobile communications device of claim 1, wherein the controller module further determines whether the allowed CSG list comprises the CSG ID in response to the response message indicating unauthorized membership of the CSG ID, and removes the CSG ID from the allowed CSG list in response to the allowed CSG list comprising the CSG ID.

3. The mobile communications device of claim 1, wherein the controller module further includes the cellular station in a cell reselection procedure with an implicit CSG priority rule performed in response to a signal quality of the cellular station falling below a predetermined threshold, and the implicit CSG priority rule specifies that cellular stations associated with CSG IDs have higher priorities than the other cellular stations.

4. The mobile communications device of claim 3, wherein the controller module further includes other cellular stations associated with the CSG ID in the cell reselection procedure with the implicit CSG priority rule.

5. The mobile communications device of claim 1, wherein the controller module further transmits a proximity indication to the service network via the wireless module in response to detecting nearness to the cellular station.

6. The mobile communications device of claim 5, wherein, prior to being handed over to the cellular station, the service network transmits a measurement request indicating the cellular station in reply to the proximity indication, and the controller module further performs a measurement on the cellular station in response to the measurement request and reports the measurement result to the service network via the wireless module.

7. The mobile communications device of claim 1, wherein the request message for CS domain is a Location Update Request or a CM Service Request, and the response message corresponding to the request message for CS domain is a Location Update Accept or a CM Service Accept.

8. The mobile communications device of claim 1, wherein the request message for PS domain is a one of the following:
a Service Request;
an Attach Request;
a Routing Area Update Request; and
a Tracking Area Update Request;
and the response message corresponding to the request message for PS domain is one of the following:
a Service Accept;
an Attach Accept;
a Routing Area Update Accept; and
a Tracking Area Update Accept.

9. A service network, comprising:
a cellular station, associated with a Closed Subscriber Group (CSG)
identification (ID) and configured to operate in a hybrid access mode, performing wireless transceiving to and from a mobile communication device; and
a control node, receiving a request message for Circuit Switched (CS) or
Packet Switched (PS) domain from the mobile communication device via the cellular station, and transmitting a response message with a CSG member indicator to the mobile communication device via the cellular station in response to the request message, wherein the CSG member indicator indicates whether the mobile communication device has authorized membership of the CSG ID.

10. The service network of claim 9, wherein the control node further determines whether the mobile communication device has authorized membership of the CSG ID, prior to the transmission of the response message.

11. The service network of claim 10, wherein the CSG member indicator indicates authorized membership of the CSG ID in response to the mobile communication device having authorized membership of the CSG ID, so that the mobile communication device adds the CSG ID in an allowed CSG list.

12. The service network of claim 10, wherein the CSG member indicator indicates unauthorized membership of the CSG ID in response to the mobile communication device not having authorized membership of the CSG ID, so that the mobile communication device removes the CSG ID from an allowed CSG list.

13. The service network of claim 9, wherein the request message for CS domain is a Location Update Request or a CM Service Request, and the response message corresponding to the request message for CS domain is a Location Update Accept or a CM Service Accept.

14. The service network of claim 9, wherein the request message for PS domain is a one of the following:
a Service Request;
an Attach Request;
a Routing Area Update Request; and
a Tracking Area Update Request;
and the response message corresponding to the request message for PS domain is one of the following:
a Service Accept;
an Attach Accept;
a Routing Area Update Accept; and
a Tracking Area Update Accept.
